# EUROPÄISCHE PATENTSCHRIFT

(11) **EP 1 154 922 B1**
(45) Veröffentlichungstag und Bekanntmachung des Hinweises auf die Patenterteilung: **04.04.2007**
(21) Anmeldenummer: 00909115.8
(22) Anmeldetag: 28.01.2000
(51) Int. Cl.: B60T 13/74

(54) **VERFAHREN UND SYSTEM ZUR ANSTEUERUNG EINER ELEKTROMECHANISCH BETÄTIGBAREN BREMSE FÜR KRAFTFAHRZEUGE**
METHOD AND SYSTEM FOR CONTROLLING AN ELECTROMECHANICALLY ACTUATED BRAKE FOR MOTOR VEHICLES
PROCEDE ET SYSTEME DE COMMANDE POUR FREIN ELECTROMECANIQUE DE VEHICULE

(30) Priorität: 19.02.1999 DE 19906909; 04.06.1999 DE 19925607
(43) Veröffentlichungstag der Anmeldung: 21.11.2001
(73) Patentinhaber: Continental Teves AG & Co. oHG, 60488 Frankfurt (DE)
(72) Erfinder: BÖHM, Jürgen, D-65558 Oberneisen (DE); HOFFMANN, Oliver, D-60486 Frankfurt (DE); OEHLER, Rainer, D-64295 Darmstadt (DE); LEIDECK, Jochen, D-64283 Darmstadt (DE); NELL, Joachim, D-63452 Hanau (DE); WILLIMOWSKI, Peter, D-63486 Bruchköbel (DE)
(74) Vertreter: Dusil, Vladimir
(86) Internationale Anmeldenummer: PCT/EP2000/000664
(87) Internationale Veröffentlichungsnummer: WO 2000/048885

(56) Entgegenhaltungen:
- EP-A- 0 894 685
- DE-A- 19 536 694
- US-A- 4 163 586
- US-A- 5 000 297
- US-A- 5 366 280

## Beschreibung

Die Erfindung bezieht sich auf ein Verfahren sowie ein System zur Ansteuerung einer Bremse für Kraftfahrzeuge, die mittels eines Aktuators elektromechanisch betätigbar ist, der aus einem Elektromotor sowie einem dem Elektromotor nachgeschalteten Getriebe besteht.

Ein derartiges Verfahren bzw. System zur Ansteuerung einer elektromechanisch betätigbaren Bremse ist z. B. aus der deutschen Offenlegungsschrift DE 195 36 694 A1 bekannt. Das Besondere an dem vorbekannten System besteht darin, dass Mittel vorgesehen sind, die die Lage eines Betätigungselements relativ zum Aktuator bestimmen, dass ein zwischen einem ersten und einem zweiten Regelmodus umschaltbarer Regler vorgesehen ist, wobei im ersten Regelmodus die Istlage des Betätigungselements einem Sollwert nachgeführt wird und im zweiten Regelmodus ein eine Verzögerung repräsentierendes Istsignal einem Wunschsignal nachgeführt wird, und dass eine Entscheidungsschaltung in Abhängigkeit von einem Entscheidungskriterium den ersten oder den zweiten Regelmodus aktiviert.

Aus der US 5,366,280 ist ein Verfahren zum Ansteuern einer elektrischen Bremse einer Hybridbremsanlage im Sinne einer Bremsbelagverschleißkompensation bzw. zum Einstellen eines Lüftspiels bekannt. Dabei wird während des Lösevorgangs der der Hinterachse zugeordneten elektrischen Bremse ein Parameter gemessen, der die von der Bremse geleistete Arbeit repräsentiert, wonach der Aktuator in eine Ausgangsposition bewegt wird, die von dem gemessenen Parameter abhängig ist. Bei den elektrischen Bremsen handelt es sich um mittels eines Elektromotors betätigbare Trommelbremsen, wobei dem Elektromotor jedoch kein Getriebe nachgeschaltet ist. Außerdem ist eine Steuereinrichtung vorgesehen, die mit einer Eingangseinrichtung sowie dem Bremsaktuator gekoppelt ist und die Bremsbefehle von der Eingangseinrichtung empfängt und Befehle für den Aktuator bereit stellt, um den dem Aktuator zugeführten Strom sowie die an den Aktuator anzulegende Spannung zu steuern bzw. zu regeln. Als nachteilig wird jedoch die Tatsache empfunden, dass die Elektromotoren bei dem bekannten Bremssystem nicht schnell genug reversieren können, so dass ein feinfühliges Antiblockiersystem nicht realisierbar ist.

Bei der Auslegung bzw. Dimensionierung eines für die bekannte elektromechanisch betätigbare Bremse geeigneten Elektromotors (Definition der Elektromotor-Kennlinie) sind neben dem verfügbaren Bauraum sowie einer definierten Leistungsaufnahme (im wesentlichen möglichst geringer Spitzen- und Dauerstrom) vor allem folgende Anforderungen an die Leistungsfähigkeit der Bremse zu berücksichtigen:
1) Möglichst schnelles Überwinden des Abstands zwischen dem Reibbelag und der Bremsscheibe (sog. Lüftspiel). Hierbei sind relativ große Wege bei kleinem Kraftniveau zurückzulegen, wodurch sich für den Elektromotor die Forderung nach einer möglichst hohen Drehzahl ergibt.
2) Geforderte Zuspannkraft- und Lösegradienten (hohe Drehzahl bei kleinen bis mittleren Momenten).
3) Dosierung der Zuspannkraft. Hierbei sind relativ große Kräfte bei kleinen Wegen gefordert, wodurch sich für den Elektromotor die Forderung nach einem möglichst großen Moment ergibt.
4) Eine geforderte maximale Zuspannkraft. Für den auszulegenden Elektromotor resultiert daraus die Forderung nach einem entsprechend hohen Moment bei niedrigeren Drehzahlen.
5) Gutes Reversierverhalten, das für Schlupfregelfunktionen (z. B. Antiblockiersystem, elektronische Fahrstabilitätsregelung) erforderlich ist, führt ebenfalls zur Forderung nach einem entsprechend hohen Motormoment.

Diese gegensätzlichen Forderungen lassen sich bei gegebenem Bauraum für den Elektromotor mit der oben erwähnten bekannten Ansteuerung nicht oder nicht optimal erfüllen.

Die Erfindung beruht auf der Aufgabe, ein Verfahren sowie ein System zur Ansteuerung einer elektromechanisch betätigbaren Bremse vorzuschlagen, welche ein Erfüllen der vorhin genannten Kriterien ermöglichen. Dabei soll in bestimmten Betriebsfällen, d.h. bedarfsabhängig, die Elektromotordrehzahl angehoben werden, ohne dabei das verfügbare Moment zu reduzieren.

Diese Aufgabe wird verfahrenmäßig dadurch gelöst, dass entsprechend der gewünschten Betätigungskraft sowie dem Betätigungskraftgradienten bzw. den diese Signale repräsentierenden Größen die Steigung durch Schwächen von Komponenten des elektromagnetischen Feldes des Elektromotors, derart geändert wird, dass bei gleichem Drehmoment eine höhere Drehzahl erreicht wird. Dadurch ergibt sich der Vorteil, dass der Elektromotor mit einer höheren Drehmomentkonstante ausgelegt werden kann, wodurch der Spitzenstrom, z. B. beim Reversieren, und der Dauerstrom bei stationären zuspannvor-gängen reduziert wird.

Dabei werden ein momentenbildender Stromwert sowie ein feldschwächender Stromwert berechnet, die in die dem Elektromotor zuzuführenden Ströme transformiert werden.

Die Berechnung des momentenbildenden Stromwertes erfolgt vorzugsweise durch die Auswertung der gewünschten und der tatsächlichen bzw. aktuellen Betätigungskraft, während die Berechnung des feldschwächenden Stromwertes durch die Auswertung des Istzustandes sowie eines Sollzustandes der Bremse erfolgt.

Nach einem weiteren vorteilhaften verfahrensmerkmal erfolgt die Auswertung der Betätigungskraft mittels einer Kraftregelung.

Die Berechnung des feldschwächenden Stromwertes erfolgt mittels eines Gütekriteriums, dessen Eingangsgrößen Betätigungskraft, Betätigungskraftänderung und Größen, die den Arbeitspunkt in der Kennlinie des Elektromotors bestimmen, sind.

Eine erste Ausführung des erfindungsgemäßen Ansteuersystems zur Durchführung des vorhin erwähnten Verfahrens zeichnet sich dadurch aus, daß
a) ein Betätigungskraftregelmodul vorgesehen ist, dem als Eingangsgröße die Differenz zwischen einem Soll- und einem Istwert der Betätigungskraft zugeführt wird und der daraus den Sollwert des momentenbildenden Stroms erzeugt,
b) ein Berechnungsmodul vorgesehen ist, dem als Eingangsgrößen den Soll- und den Istwert der Betätigungskraft, den Sollwert des Betätigungskraftgradienten bzw. einer den Betätigungskraftgradienten repräsentierenden Größe, den Istwert der Motorposition sowie den Istwert und den Sollwert der Motordrehzahl repräsentierende Signale zugeführt werden und das aus den Eingangsgrößen den Sollwert des feldschwächenden Stroms erzeugt, wobei
c) die Sollwerte des momentenbildenden als auch des feldschwächenden Stroms sowie das den Istwert der Motorposition repräsentierende Signal in einer Stromregelung in ein Signal umgewandelt werden, das die an den Elektromotor anzulegende Spannung repräsentiert.

Bei vorteilhaften Weiterbildungen der ersten Ausführung des erfindungsgemäßen Ansteuerungssystems werden dem Betätigungskraftregler zusätzlich als Eingangsgrößen dem Betätigungskraftgradienten sowie dem Istwert der Motordrehzahl entsprechende Signale zugeführt.

Eine zweite Ausführung des erfindungsgemäßen Ansteuersystems zur Durchführung des vorhin erwähnten Verfahrens zeichnet sich dadurch aus, daß
a) ein Betätigungskraftregler vorgesehen ist, dem als Eingangsgröße die Differenz zwischen einem Soll- und einem Istwert der Betätigungskraft zugeführt wird und der daraus den Sollwert der Motordrehzahl erzeugt, der
b) mit dem Istwert der Motordrehzahl verglichen und die so entstehende Differenz einem Drehzahlregler zugeführt wird, der daraus den Sollwert des momentenbildenden Stromes erzeugt,
c) ein Berechnungsmodul vorgesehen ist, dem als Eingangsgrößen den Soll- und den Istwert der Betätigungskraft, den Sollwert des Betätigungskraftgradienten, den Istwert der Motorposition sowie den Istwert der Motordrehzahl repräsentierende Signale zugeführt werden und das aus den Eingangsgrößen den Sollwert des feldschwächenden Stromes erzeugt, wobei
d) die Sollwerte des momentenbildenden als auch des feldschwächenden Stromes sowie das den Istwert der Motorposition repräsentierende Signal in einer elektronischen Stromregelung in ein Signal umgewandelt werden, das die an den Elektromotor anzulegende Spannung repräsentiert.

Bei einer dritten Ausführung des erfindungsgemäßen Ansteuersystems zur Durchführung des vorhin erwähnten Verfahrens wird vorgeschlagen, daß
a) ein Betätigungskraftregler vorgesehen ist, dem als Eingangsgröße die Differenz zwischen einem Soll- und einem Istwert der Betätigungskraft zugeführt wird und der daraus den Sollwert der Motordrehzahl erzeugt,
b) dem Betätigungskraftregler ein Vorsteuermodul parallel geschaltet ist, dem als Eingangsgrößen der Istwert der Betätigungskraft sowie der Sollwert des Betätigungskraftgradienten zugeführt werden und dessen Ausgangsgrößen einem zusätzlichen Sollwert der Motordrehzahl sowie einem zusätzlichen Sollwert des momentenbildenden Stromes entsprechen,
c) zum Sollwert der Motordrehzahl der zusätzliche Sollwert der Motordrehzahl hinzuaddiert und mit dem Istwert der Motordrehzahl verglichen wird, und die so entstehende Differenz einem Drehzahlregler zugeführt wird, der daraus den geregelten Sollwert des momentenbildenden Stromes erzeugt,
d) zu dem der zusätzliche Sollwert des momentenbildenden Stroms hinzuaddiert wird und das Ergebnis der Addition den Sollwert des momentenbildenden Stromes darstellt,
e) ein Berechnungsmodul vorgesehen ist, dem als Eingangsgrößen den Soll- und den Istwert der Betätigungskraft, den Sollwert des Betätigungskraftgradienten, den Istwert der Motorposition sowie den Istwert der Motordrehzahl repräsentierende Signale zugeführt werden und das aus den Eingangsgrößen den Sollwert des feldschwächenden Stromes erzeugt, wobei
f) die Sollwerte des momentenbildenden als auch des feldschwächenden Stroms sowie das den Istwert der Motorposition repräsentierende Signal in einer elektronischen Stromregelung in ein Signal transformiert werden, das die an den Elektromotor anzulegende Spannung repräsentiert.

Weitere Einzelheiten, Merkmale und Vorteile der Erfindung gehen aus der nachfolgenden Beschreibung eines Ausführungsbeispiels unter Bezugnahme auf die beiliegende Zeichnung hervor. In der Zeichnung zeigt:
- Fig. 1: ein Blockdiagramm eines Regelsystems zur Durchführung des erfindungsgemäßen Verfahrens,
- Fig. 2: den Aufbau der im Regelsystem gemäß Fig. 1 verwendeten Stromregelung zur Erzeugung der gewünschten Motorspannung,
- Fig. 3: eine erste Ausführung des im Regelsystem gemäß Fig. 1 verwendeten Betätigungskraftmoduls,
- Fig. 4: eine zweite Ausführung des im Regelsystem gemäß Fig. 1 verwendeten Betätigungskraftmoduls,
- Fig. 5: die Drehmoment-Drehzahl-Kennlinien des Elektromotors gemäß Fig. 1, und
- Fig. 6a, b: zeitliche Verläufe der Betätigungskraft, des Motormoments sowie der Motordrehzahl ohne sowie mit Wirkung der erfindungsgemäßen Maßnahme.

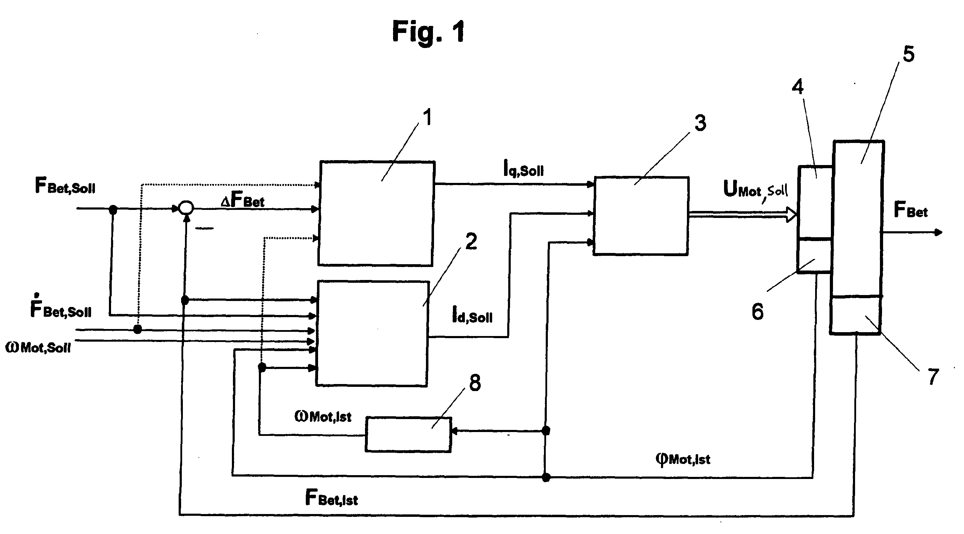

Das in Fig. 1 dargestellte Regelsystem besteht im wesentlichen aus einem Betätigungskraftregelmodul 1, einem dem Betätigungskraftregelmodul 1 parallel geschalteten Berechnungsmodul 2 sowie einer dem Betätigungskraftregelmodul 1 und dem Berechnungsmodul 2 nachgeschalteten Stromregelung 3, mit deren dem Motorspannung-Sollwert entsprechendem Ausgangssignal U_{Mot,Soll} ein lediglich schematisch angedeuteter Elektromotor 4 einer elektromechanisch betätigbaren Bremse angesteuert wird, die mit dem Bezugszeichen 5 versehen ist. Der Elektromotor 4 ist vorzugsweise mit einem Positionsmeßsystem 6 ausgestattet, dessen die Motor-Istposition repräsentierendes Ausgangssignal ϕ_{Mot, Ist} der Stromregelung 3 sowie dem Berechnungsmodul 2 zugeführt wird. Außerdem wird das Ausgangssignal ϕ_{Mot, Ist} in einer Differenzierschaltung 8 einer zeitlich differenzierenden Verarbeitung unterworfen. Das Ausgangssignal der Differenzierschaltung 8, das dem Istwert der Motordrehzahl ω_{Mot,Ist} entspricht, wird als weitere Eingangsgröße dem Berechnungsmodul 2 zugeführt.

Wie Fig. 1 weiterhin zu entnehmen ist, werden dem vorhin erwähnten Berechnungsmodul 2 als weitere Eingangsgrößen die den Sollwerten der Betätigungskraft und des Betätigungskraftgradienten, dem Istwert der Betätigungskraft sowie dem Sollwert der Motordrehzahl entsprechenden Signale F_{Bet, Soll}, Ḟ_{Bet, Soll}, F_{Bet, Ist}, ω_{Mot, Soll} zugeführt. Die Aufgabe des Berechnungsmoduls 2 besteht nun darin, ein Signal I_{d, Soll} zu erzeugen, das einem Stromanteil entspricht, mit dem, wie im nachfolgenden Text ausführlich erläutert wird, die Steigung der Drehmoment-Drehzahl-Kennlinie des Elektromotors 4 beeinflußt wird. Das Ausgangssignal des Berechnungsmoduls 2, das als eine zweite Eingangsgröße der Stromregelung 3 zur Verfügung gestellt wird, entspricht dem Sollwert I_{d, Soll} eines Stromanteils, der die Komponenten des elektro-magnetischen Feldes des Elektromotors schwächt, welche dessen Drehmoment-Drehzahl-Kennlinie verändern. Das Berechnungsmodul 2 stellt vorzugsweise eine unscharfe (Fuzzy-) Logik dar, die Entscheidungs-kriterien enthält, ob der feldschwächende Stromanteil eingesetzt wird. Als Beispiel für den Einsatz kann die Überwindung des Lüft-spiels genannt werden.

Die Ansteuerung der erwähnten elektromechanisch betätigbaren Bremse 5 basiert auf einer Kraftregelung. Dabei wird von einem Bedienelement bzw. einer übergeordneten Systemeinheit der Sollwert für die einzustellende Betätigungskraft F_{Bet,Soll} vorgegeben, der mit einem dem Istwert der Betätigungskraft entsprechenden Signal F_{Bet,Ist} verglichen wird und die so entstehende Regelabweichung ΔF_{Bet} dem Betätigungskraftregelmodul 1 zugeführt wird. Alternativ können dem Betätigungskraft-regelmodul 1 als weitere Eingangsgrößen ein dem Betätigungskraftgradienten entsprechendes Signal Ḟ_{Bet,Soll} sowie das vorhin erwähnte, dem Motordrehzahl-Istwert entsprechende Signal ω_{Mot, Ist} zugeführt werden. Das dem Istwert des Betätigungskraft entsprechende Signal F_{Bet, Ist} wird dabei vorzugsweise von einem lediglich schematisch angedeuteten Kraftmeßelement 7 geliefert. Es kann auch aus einem Verfahren zur sensorlosen Ansteuerung der elektromechanisch betätigbaren Bremse gewonnen werden. Das Ausgangs-signal des Betätigungskraftregelmoduls 1, das als eine Eingangsgröße der Stromregelung 3 zur Verfügung gestellt wird, entspricht dem Sollwert I_{q,Soll} eines momentenbildenden Stromanteils.

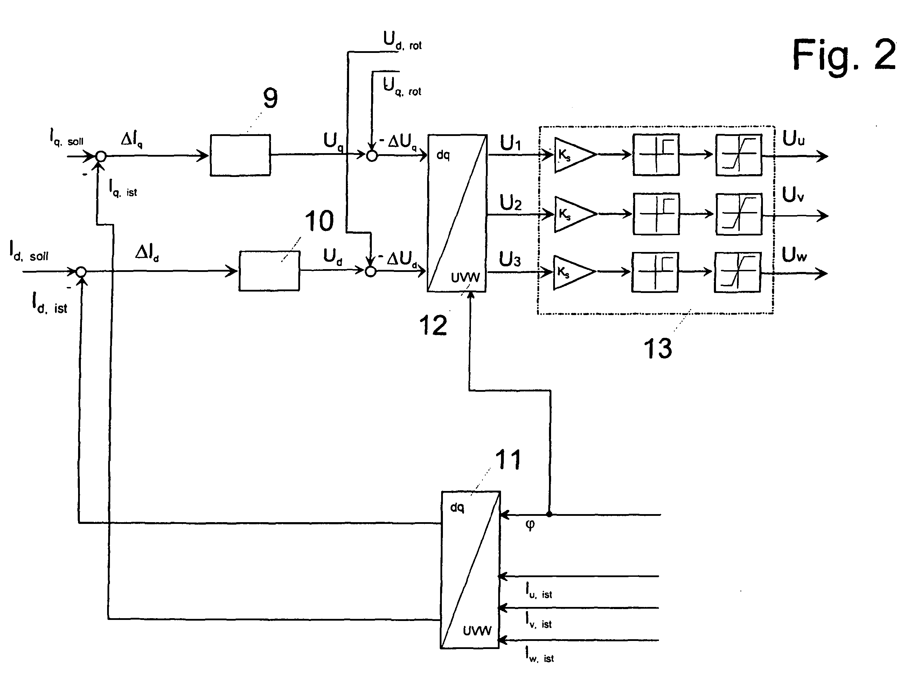

Der Aufbau der im Zusammenhang mit Fig. 1 erwähnten Stromregelung 3 ist in Fig. 2 dargestellt. Wie der Darstellung zu entnehmen ist, besteht die Stromregelung 3 im wesentlichen aus zwei Reglern 9, 10, zwei Transformationsgliedern 11, 12 sowie einem Funktionsblock 13 zur Berechnung der Motor-Rotationsspannungen. Dem ersten Regler 9 wird das Ergebnis ΔI_{q} eines Vergleichs zwischen dem Sollwert des momentenbildenden Stroms I_{q, Soll} und seinem Istwert I_{q, Ist}, der vom ersten Transformationsglied 11 geliefert wird, zugeführt. Die Ausgangsgröße U_{q} des ersten Reglers 9 wird mit einer ersten Rotationsspannung U_{q, rot} verglichen und die so entstehende Abweichung ΔU_{q} wird dem ersten Eingang des zweiten Transformationsglieds 12 zugeführt.

Dem zweiten Regler 10 wird das Ergebnis ΔI_{d} eines Vergleichs zwischen dem Sollwert des feldschwächenden Stroms I_{d, Soll} und einem Istwert I_{d, Ist}, der ebenso vom ersten Transformationsglied 11 geliefert wird, zugeführt. Die Ausgangsgröße U_{d} des zweiten Reglers 10 wird mit einer zweiten Rotationsspannung U_{d, rot} verglichen und die so entstehende Abweichung ΔU_{d} wird dem zweiten Eingang des zweiten Transformationsglieds 12 zugeführt.

Die vorhin erwähnten Istwerte des momentenbildenden Stroms I_{q, Ist} sowie des feldschwächenden Stroms I_{d, Ist} sind nur mathematisch existente Größen, die im ersten Transformationsglied 11 aus den einzelnen, im Elektromotor 4 wirkenden Phasenströmen Iᵤ, Iᵥ, I_{w} sowie dem der Motorposition entsprechenden Signal ϕ, die reale Größen darstellen, gebildet werden. Ebenfalls nur mathematisch existente Größen sind auch die dem zweiten Transformationsglied 12 zugeführten Werte ΔU_{q} und ΔU_{d}, aus denen darin unter Einbeziehung der Motorposition ϕ reale Spannungswerte U₁, U₂, U₃, gebildet werden, die mittels eines Verstärkers 13 in Sollwerte von dem Elektromotor zuzuführenden Phasen-spannungen Uᵤ, Uᵥ, U_{w} entsprechend U_{d, rot}, U_{q, rot} umgewandelt werden.

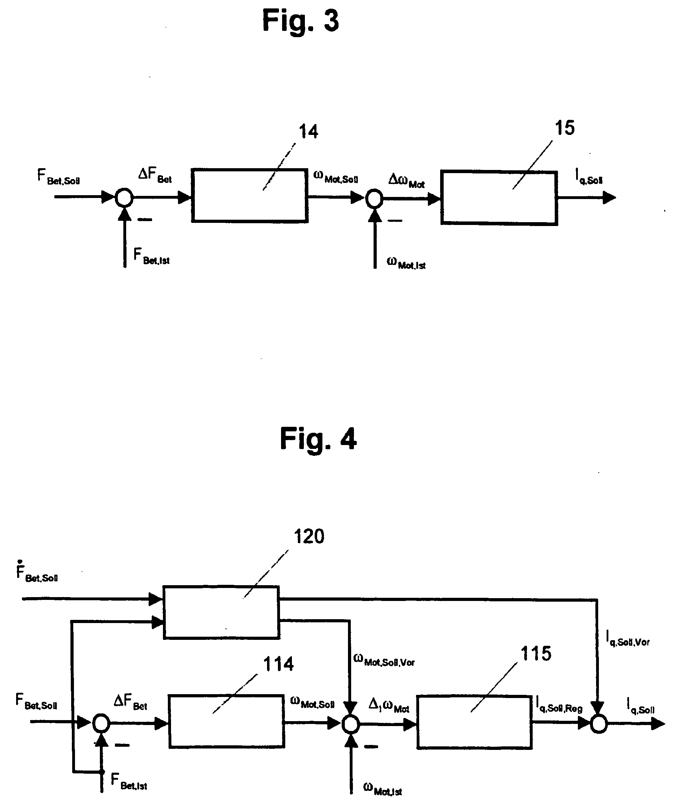

Wie bereits oben erwähnt wurde, zeigt Fig. 3 eine erste Ausführung des im Zusammenhang mit Fig. 1 erläuterten Betätigungskraftregelmoduls 1. Bei der gezeigten Ausführung wird die Regelabweichung ΔF_{Bet} in einem Betätigungskraftregler 14 in den Sollwert der Motordrehzahl ω_{Mot,Soll} umgewandelt, der mit dem Motordrehzahl-Istwert ω_{Mot,Ist} verglichen wird und das Ergebnis des Vergleichs Δω_{Mot} wird in einem nachgeschalteten Drehzahlregler 15 in den Sollwert des momentenbildenden Stromanteils I_{q,Soll} umgewandelt.

Bei der in Fig. 4 gezeigten zweiten Ausführung des Betätigungskraftregelmoduls 1 ist dem Betätigungskraftregler 114 eine Vorsteuerung 120 parallel geschaltet, der als Eingangsgrößen der Sollwert des Betätigungskraftgradienten F _{Bet, Soll} sowie der Istwert der Betätigungskraft F_{Bet, Ist} zugeführt werden. In der Vorsteuerung 120 erfolgt einerseits eine Berechnung eines Motordrehzahl-Sollwertes ω_{Mot, Soll, Vor}, der die Systemsteifigkeit berücksichtigt, aus dem erstgenannten Sollwert des Betätigungskraftgradienten Ḟ_{Bet, Soll} und andererseits eine Berechnung des Sollwertes eines momentenbildenden Motorstromanteils I_{q,Soll,Vor} aus dem Istwert der Betätigungskraft F_{Bet,Ist}, der der Kompen-sation von Störgrößeneinflüssen dient. Der Motordrehzahl-Sollwert ω_{Mot,Soll,Vor} wird bei der Bildung der Regelab-weichung Δ₁ω_{Mot} berücksichtigt, die in einem nachge-schalteten Drehzahlregler 115 in den Sollwert eines geregelten momentenbildenden Motorstromanteils I_{q, Soll, Reg} umgewandelt wird. Zum geregelten momentenbildenden Motorstromanteil I_{q, Soll, Reg} wird der vorhin erwähnte Sollwert des momentenbildenden Motorstromanteils I_{q, Soll, Vor} hinzuaddiert, wobei das Ergebnis der Addition dem der Stromregelung 3 (Fig. 1) zugeführten Sollwert des momentenbildenden Motorstromanteils I_{q,Soll} entspricht. Dabei kann der Aufbau der im Zusammenhang mit Fig. 4 erwähnten Regler 114, 115 dem Aufbau der in Fig. 3 gezeigten Regler 14, 15 identisch entsprechen.

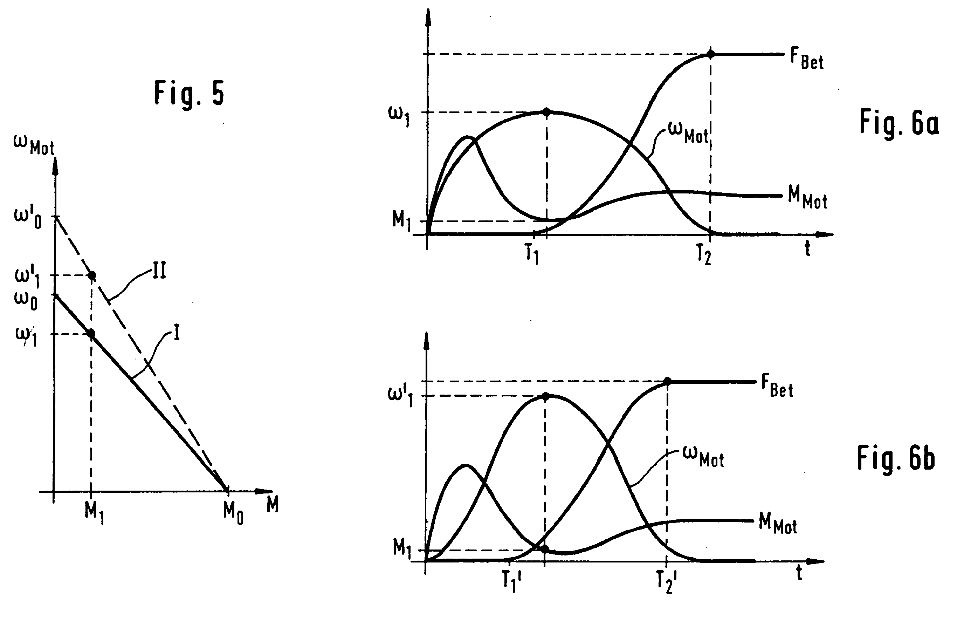

Zur Verdeutlichung der Wirkung der Feldschwächung sind in Fig. 5 und 6 Motorkennlinien des Elektromotors sowie typische zeitliche Verläufe eines Zuspannvorgangs einer elektromechanischen Bremse dargestellt.

In Fig. 5 wird mit der durchgezogenen Linie I die Kennlinie eines Elektromotors dargestellt, bei dem das erfindungsgemäße Verfahren nicht angewandt wird bzw. keine feldschwächenden Maßnahmen durchgeführt werden. Der Darstellung ist zu entnehmen, daß bei der Leerlaufdrehzahl ω₀ noch kein Motormoment aufgebracht wird. Das dem Drehzahlwert ω₁ entsprechende Motormoment wird mit M₁ bezeichnet, während mit M₀ das (maximal erreichbare) Stillstandsmoment bezeichnet wird. Wie die gestrichelte Kennlinie II erkennen läßt, wird die Steigung der Kennlinie durch die Wirkung der Feldschwächung in dem Sinne verändert, daß eine wesentlich höhere Motorleerlaufdrehzahl ω'₀ erreicht wird, so daß auch dem vorhin erwähnten Moment M₁ eine höhere Drehzahl ω'₁ entspricht, ohne daß das Stillstandsmoment verringert wird.

Fig. 6a zeigt zunächst das Verhalten der Betätigungskraft F_{Bet}, der Motordrehzahl ω_{Mot} und des Motormoments M_{Mot} ohne Feldschwächung. Das Motormoment ist im allgemeinen proportional zum momentenbildenden Stromanteil und kann aus diesem mittels der Drehmomentkonstanten ermittelt werden. Fig. 6a ist zu entnehmen, daß im Zeitpunkt T₁ das vorhin erwähnte Lüftspiel überwunden ist und die Betätigungskraft F_{Bet} zu steigen beginnt. Die gewünschte Zielkraft wird im Zeitpunkt T₂ erreicht. Fig. 6b zeigt dagegen den betrachteten Zuspannvorgang bei einer geeigneten Ansteuerung des Elektromotors, bei der die vorhin erläuterte Feldschwächung durchgeführt wird. Vergleicht man nun die in Fig. 6a und 6b dargestellten Verläufe, so ist ohne weiteres zu erkennen, daß die dem gleichen Wert M₁ des Elektromotormoments entsprechende Drehzahl ω'₁ wesentlich höher ist als die in Fig. 6a dargestellte Drehzahl ω₁. Durch die mittels der Feldschwächung erreichte Drehzahlerhöhung ist auch das in Fig. 6b gezeigte, zur Lüftspielüberwindung erforderliche Zeitintervall 0 - T₁' wesentlich kürzer als das Zeitintervall 0 - T₁ gemäß Fig. 6a. Die gleiche Aussage gilt auch für den Zeitabschnitt 0 - T₂', der zum Erreichen der Zielkraft erforderlich ist.

## Patentansprüche

1. Verfahren zur Ansteuerung einer Bremse eines Fahrzeuges, die mittels eines Aktuators elektromechanisch betätigbar ist, der aus einem Elektromotor sowie einem dem Elektromotor nachgeschalteten Getriebe besteht, wobei der Elektromotor eine konstruktionsbedingte Drehzahl-Drehmoment-Kennlinie aufweist, **dadurch gekennzeichnet, dass** entsprechend der gewünschten Betätigungskraft (F_{Bet,Soll}) sowie dem Betätigungskraftgradienten (Ḟ_{Bet,Soll}) bzw. den diese Signale repräsentierenden Größen die Steigung der Drehzahl-Drehmoment-Kennlinie des Elektromotors (4) durch Schwächen von Komponenten des elektromagnetischen Feldes des Elektromotors (4) derart geändert wird, dass bei gleichem Drehmoment (M₁) eine höhere Drehzahl (ω₁) erreicht wird.

2. Verfahren nach Anspruch 1 **dadurch gekennzeichnet, dass** Sollwerte eines momentenbildenden Stromes (I_{q, Soll}) sowie eines feldschwächenden Stromes (I_{d, Soll}) berechnet werden, die in dem Elektromotor (4) zuzuführende Spannungen (Uᵤ, Uᵥ, U_{w}) umgewandelt werden.

3. Verfahren nach Anspruch 2 **dadurch gekennzeichnet, dass** die Berechnung des Sollwertes des momentenbildenden Stromes (I_{q,Soll}) durch die Auswertung der gewünschten Betätigungskraft (F_{Bet,Soll}) sowie der aktuellen Betätigungskraft (F_{Bet,Ist}) erfolgt.

4. Verfahren nach Anspruch 2 **dadurch gekennzeichnet, dass** die Berechnung des Sollwertes des feldschwächenden Stromes (I_{d,Soll}) durch die Auswertung des Istzustandes sowie eines Sollzustandes der Bremse (5) erfolgt.

5. Verfahren nach Anspruch 4 **dadurch gekennzeichnet, dass** die Berechnung des Sollwertes des feldschwächenden Stromes (I_{d, Soll}) mittels eines Gütekriteriums erfolgt, dessen Eingangsgrößen Betätigungskraft, Betätigungskraftänderung und Größen, die den Arbeitspunkt in der Kennlinie des Elektromotors (4) bestimmen, sind.

6. System zur Ansteuerung einer Bremse, die mittels eines Elektromotors elektromechanisch betätigbar ist, der aus einem Elektromotor sowie einem dem Elektromotor nachgeschalteten Getriebe besteht, **dadurch gekennzeichnet, dass**
a) ein Betätigungskraftregelmodul (1) vorgesehen ist, dem als Eingangsgröße die Differenz zwischen einem Soll- und einem Istwert der Betätigungskraft (F_{Bet,Soll}) zugeführt wird und das daraus den Sollwert (I_{q, Soll}) des momentenbildenden Stromes erzeugt,
b) ein Berechnungsmodul (2) vorgesehen ist, dem als Eingangsgrößen den Soll- und den Istwert der Betätigungskraft (F_{Bet,Soll}, F_{Bet,Ist}), den Sollwert des Betätigungskraftgradienten (Ḟ_{Bet,Soll}), den Istwert (ϕ_{Mot,Ist}) der Motorposition sowie den Istwert (ω_{Mot,Ist}) der Motordrehzahl repräsentierende Signale zugeführt werden und das aus den Eingangsgrößen den Sollwert (I_{d, Soll}) des feldschwächenden Stromes erzeugt, wobei
c) die Sollwerte des momentenbildenden als auch des feldschwächenden Stromes sowie das den Istwert (ϕ_{Mot, Ist}) der Motorposition repräsentierende Signal mittels einer elektronischen Stromregelung (3) in ein Signal (U_{Mot}) umgewandelt werden, das die an den Elektromotor (4) anzulegende Spannung repräsentiert.

7. System nach Anspruch 6 **dadurch gekennzeichnet, dass** der Betätigungskraftregelung (1) zusätzlich ein dem Betätigungskraftgradienten (Ḟ_{Bet, Soll}) entsprechendes Signal als Eingangsgröße zugeführt wird.

8. System nach Anspruch 6 **dadurch gekennzeichnet, dass** der Betätigungskraftregelung (1) zusätzlich ein dem Istwert der Motordrehzahl entsprechendes Signal (ω_{Mot, Ist}) als Eingangsgröße zugeführt wird.

9. System nach Anspruch 6 und 8 **dadurch gekennzeichnet, dass** das Betätigungskraftregelmodul (1) durch einen Betätigungskraftregler (14) gebildet ist, dem als Eingangsgröße die Differenz (ΔF_{Bet}) zwischen einem Soll- und einem Istwert der Betätigungskraft (F_{Bet,Soll,}F_{Bet,Ist}) zugeführt wird und der daraus den Sollwert (ω_{Mot,Soll}) der Motordrehzahl erzeugt, der mit dem Istwert (ω_{Mot,Ist}) der Motordrehzahl verglichen wird und die so entstehende Differenz (Δω_{Mot}) einem Drehzahlregler (15) zugeführt wird, der daraus den Sollwert (I_{q,Soll}) des momentenbildenden Stromes erzeugt.

10. System nach Anspruch 9 **dadurch gekennzeichnet, dass**
a) dem Betätigungskraftregler (114) ein Vorsteuermodul(120) parallelgeschaltet ist, dem als Eingangsgrößen der Istwert (F_{Bet, Ist}) der Betätigungskraft sowie der Sollwert des Betätigungskraftgradienten (Ḟ_{Bet, Soll}) zugeführt werden und dessen Ausgangsgrößen einem zusätzlichen Sollwert der Motordrehzahl (ω_{Mot,Soll,Vor}) sowie einem zusätzlichen Sollwert (I_{q,Soll,Vor}) des momentenbildenden Stromes entsprechen,
b) zum Sollwert der Motordrehzahl (ω_{Mot,Soll}) der zusätzliche Sollwert der Motordrehzahl (ω_{Mot,Soll,Vor}) hinzuaddiert und mit dem Istwert der Motordrehzahl (ω_{Mot,Ist}) verglichen wird, und die so entstehende Differenz (Δ₁ω_{Mot}) einem Drehzahlregler (115) zugeführt wird, der daraus den geregelten Sollwert (I_{q, Soll, Reg}) des momentenbildenden Stromes erzeugt,
d) zu dem der zusätzliche Sollwert (I_{q, Soll, Vor}) des momentenbildenden Stroms hinzuaddiert wird und das Ergebnis der Addition den Sollwert (I_{q,Soll}) des momentenbildenden Stromes darstellt.

## Claims

1. A method for controlling a brake of a vehicle, which can be actuated electromechanically by means of an actuator consisting of an electric motor as well as a drive mechanism positioned downstream of the electric motor, with the electric motor exhibiting a rotational-speed/speed-torque characteristic curve defined by the design, **characterized in that** corresponding to the desired actuating force (F_{Bet, Soll}) as well as the actuating force gradient (**F**_{Bet, Soll}) or the values representing these signals, the gradient of the rotational-speed/speed-torque characteristic curve of the electric motor (4) is modified due to weaknesses of components of the electromagnetic field of the electric motor (4) in such a way that a higher rotational speed (ω₁) is achieved at the same torque (M₁).

2. A method according to claim 1, **characterized in that** set values of a torque-producing current (I_{q, Soll}) and of a field-weakening current (I_{d, Soll}) are calculated and converted to the voltages (U_{u,}, Uᵥ, U_{w}) to be supplied to the electric motor (4).

3. A method according to claim 2, **characterized in that** the set value of the torque-producing current (I_{q,Soll}) is calculated by evaluating the desired actuating force (F_{Bet,soll}) as well as the current actuating force (F_{Bet,Ist}).

4. A method according to claim 2, **characterized in that** the set value of the field-weakening current (I_{d, Soll}) is calculated on the basis of the evaluation of the actual state as well as a desired state of the brake (5).

5. A method according to claim 4, **characterized in that** the set value of the field-weakening current (I_{d,Soll}) is calculated by means of a quality criterion whose input quantities are the actuating force, actuating force variation and values determining the operating point in the characteristic curve of the electric motor (4).

6. A system for controlling a brake that can be actuated electromagnetically by means of an electric motor, consisting of an electric motor as well as a drive mechanism positioned downstream of the electric motor, **characterized in that**
a) an actuating force control module (1) is provided, which receives the difference between a desired and an actual value of the actuating force (F_{Bet,Soll}) as an input quantity and generates therefrom the set value (I_{q, Soll}) of the torque-producing current;
b) a calculating module (2) is provided, which receives as input quantities the desired and actual values of the actuating force (F_{Bet,Soll}, F_{Bet,Ist}), the set value of the actuating force gradient (P_{Bet,Soll}), and signals representing the actual value (ϕ_{Mot,Ist}) of the motor position as well as the actual value (ϕ_{Mot,Ist}) of the motor speed, and which generates from these input quantities the set value (I_{d, Soll}) of the field-weakening current, with
c) the set values of the torque-producing current and the field-weakening current as well as the signal representing the actual value (ϕ_{Mot, Ist}) of the motor position being converted, by means of an electronic current control (3), to a signal (U_{Mot}) that represents the voltage to be applied to the electric motor (4).

7. A system according to claim 6, **characterized in that** a signal corresponding to the actuating force gradient (Ḟ_{Bet,Soll}) is additionally supplied as an input quantity to the actuating force control (1).

8. A system according to Claim 6, **characterized in that** a signal (ω_{Mot,Ist}) corresponding to the actual value of the motor speed is additionally supplied as an input quantity to the actuating force control (1).

9. A system according to claims 6 and 8, **characterized in that** the actuating force control module (1) is provided by an actuating force controller (14), which receives as an input quantity the difference (ΔF_{Bet}) between a desired and an actual value of the actuating force (F_{Bet, Soll}, F_{Bet, Ist}) and generates therefrom the set value (ω_{Mot, Soll}) of the motor rotational speed, which is compared to the actual value (ω_{Mot,Ist}) of the motor rotational speed, and the ensuing difference (Δω_{Mot}) is supplied to a speed controller (15), which generates the set value (I_{q, Soll}) of the torque-producing current therefrom.

10. A system according to claim 9,
**characterized in that**
a) a pre-control module (120) is connected in parallel to the actuating force controller (114), with said pre-control module (120) being supplied with the actual value (F_{Bet,Ist}) of the actuating force as well as the set value of the actuating force gradient (Ḟ_{Bet,Soll}) as input quantities, and its output quantities correspond to an additional set value of the motor rotational speed (ω_{Mot,Soll,Vor}) as well as an additional set value (I_{q,Soll,Vor}) of the torque-producing current;
b) the additional desired value of the motor rotational speed (ω_{Mot,Soll,Vor}) is added to the set value of the motor rotational speed (ω_{Mot,Soll}) and compared to the actual value of the motor rotational speed (ω_{Mot,Ist}), and the ensuing difference (Δ₁ω_{Mot}) is supplied to a speed controller (115), which generates the controlled set value (I_{q,Soll,Reg}) of the torque-producing current therefrom;
c) to which the additional set value (I_{q,Soll,Vor}) of the torque-producing current is added, and the result of the addition represents the set value (I_{q, Soll}) of the torque-producing current.

## Revendications

1. Procédé de commande d'un frein de véhicule qui peut être actionné électromécaniquement au moyen d'un actionneur lequel comprend un moteur électrique ainsi qu'une transmission montée en aval du moteur électrique, le moteur électrique présentant une courbe caractéristique vitesse de rotation-couple de rotation définie par la construction, **caractérisé en ce que** conformément à la force d'actionnement souhaitée (*F*_{Bet,Soll}) ou au gradient de la force d'actionnement (*Ḟ*_{Bet, Soll}) ou aux grandeurs représentant ces signaux, la pente de la courbe vitesse de rotation-couple de rotation du moteur électrique (4) est modifiée par affaiblissement des composantes du champ électromagnétique du moteur électrique de manière à atteindre une vitesse de rotation (ω₁) supérieure pour un même couple de rotation (M₁).

2. Procédé selon la revendication 1, **caractérisé en ce que** des valeurs de consigne d'un courant (I_{q,Soll}) formant le couple ainsi que d'un courant affaiblissant le champ (I_{d, Soll}) sont calculées, lesquelles sont converties en tensions (Uᵤ, Uᵥ, U_{w}) à amener au moteur électrique (4).

3. Procédé selon la revendication 2, **caractérisé en ce que** le calcul de la valeur de consigne du courant formant le couple (I_{q,Soll}) s'effectue par évaluation de la force d'actionnement souhaitée (*F*_{Bet,Soll}) ainsi que de la force d'actionnement actuelle (*F*_{Bet,Ist}).

4. Procédé selon la revendication 2, **caractérisé en ce que** le calcul de la valeur de consigne du courant affaiblissant le champ (I_{d,Soll}) s'effectue par évaluation de l'état réel ainsi que d'un état de consigne du frein (5).

5. Procédé selon la revendication 4, **caractérisé en ce que** le calcul de la valeur de consigne du courant affaiblissant le champ (I_{d, Soll}) s'effectue au moyen d'un critère de qualité dont les grandeurs d'entrée sont la force d'actionnement, la variation de la force d'actionnement et des grandeurs qui déterminent le point de travail dans la courbe caractéristique du moteur électrique (4).

6. Système de commande d'un frein qui peut être actionné électromécaniquement au moyen d'un moteur électrique qui comporte un moteur électrique ainsi que d'une transmission montée en aval du moteur électrique, **caractérisé en ce que**
a) il est prévu un module de régulation de force d'actionnement (1) auquel est envoyée comme grandeur d'entrée la différence entre une valeur de consigne et une valeur réelle de la force d'actionnement (*F*_{Bet,Soll}) et qui produit à partir de celle-ci la valeur de consigne (I_{q,Soll}) du courant formant le couple,
b) il est prévu un module de calcul (2) auquel sont envoyées des signaux représentant comme grandeurs d'entrée la valeur de consigne et la valeur réelle de la force d'actionnement (*F*_{Bet,Soll}), (*F*_{Bet,Ist}), la valeur de consigne du gradient de la force d'actionnement (*Ḟ*_{Bet,Soll}), la valeur réelle (ϕ_{Mot,Ist}) de la position du moteur ainsi que la valeur réelle (ω_{Mot, Ist}) de signaux représentant la vitesse de rotation du moteur, et qui produit, à partir des grandeurs d'entrée, la valeur de consigne (I_{d,soll}) du courant affaiblissant le champ,
c) les valeurs de consigne du courant formant le couple ainsi que du courant affaiblissant le champ et le signal représentant la valeur réelle (ω_{Mot, Ist}) de la position du moteur étant converties, au moyen d'une régulation de courant électronique (3), en un signal (U_{Mot}) qui représente la tension à appliquer au moteur électrique (4).

7. Système selon la revendication 6, **caractérisé en ce qu'**à la régulation de la force d'actionnement (1) est envoyé en supplément un signal, servant de grandeur d'entrée, correspondant au gradient de la force d'actionnement (*Ḟ*_{Bet, Soll}).

8. Système selon la revendication 6, **caractérisé en ce qu'**à la régulation de la force d'actionnement (1) est envoyé en supplément un signal (ω_{Mot,Ist}) servant de grandeur d'entrée, correspondant à la valeur réelle de la vitesse de rotation du moteur.

9. Système selon les revendications 6 et 8, **caractérisé en ce que** le module de régulation de la force d'actionnement (1) est formé par un régulateur de force d'actionnement (14) auquel est envoyée, comme grandeur d'entrée, la différence (ΔF_{Bet}) entre une valeur de consigne et une valeur réelle de la force d'actionnement (*F*_{Bet, Soll,} *F*_{Bet,Ist}) et qui produit à partir de celle-ci la valeur de consigne (ω_{Mot,Soll}) de la vitesse de rotation du moteur, laquelle est comparée à la valeur réelle (ω_{Mot,Ist}) de la vitesse de rotation du moteur et la différence (Δω_{Mot}) ainsi obtenue est amenée à un régulateur de vitesse de rotation (15) qui produit, à partir de celle-ci, la valeur de consigne (I_{q, Soll}) du courant formant le couple.

10. Système selon la revendication 9, **caractérisé en ce que**
a) en parallèle au régulateur de la force d'actionnement (114) est couplé un module de commande pilote (120) auquel sont envoyées comme grandeurs d'entrée, la valeur réelle (*F*_{Bet, Ist}) de la force d'actionnement ainsi que la valeur de consigne du gradient de la force d'actionnement (*Ḟ*_{Bet, Soll}) et dont les grandeurs de sortie correspondent à une valeur de consigne supplémentaire de la vitesse de rotation du moteur (ω_{Mot,Soll,Vor}) ainsi qu'à une valeur de consigne supplémentaire (I_{q,Soll,Vor}) du courant formant le couple,
b) à la valeur de consigne de la vitesse de rotation du moteur (ω_{Mot,Soll}) est additionnée la valeur de consigne supplémentaire de la vitesse de rotation du moteur (ω_{Mot,Soll,Vor}) qui est comparée à la valeur réelle de la vitesse de rotation du moteur (ω_{Mot,Ist}), et la différence (Δ₁ω_{Mot}) ainsi obtenue est envoyée à un régulateur de vitesse de rotation (115) qui produit, à partir de celle-ci, la valeur de consigne régulée (I_{q,Soll,Reg}) du courant formant le couple,
d) à laquelle est additionnée la valeur de consigne supplémentaire (I_{q, Soll, Vor}) du courant formant le couple et le résultat de l'addition représente la valeur de consigne (I_{q, Soll}) du courant formant le couple.
